# FASCICULE DE BREVET EUROPEEN

(11) **EP 0 459 843 B1**
(45) Date de publication et mention de la délivrance du brevet: **04.08.1993**
(21) Numéro de dépôt: 91401014.5
(22) Date de dépôt: 17.04.1991
(51) Int. Cl.: F16D 66/02

(54) **Témoin d'usure pour garniture de friction**
Verschleissanzeigeeinrichtung für Bremsbelag
Brake lining wear indicator

(30) Priorité: 31.05.1990 FR 9006774
(43) Date de publication de la demande: 04.12.1991
(73) Titulaire: ALLIEDSIGNAL EUROPE SERVICES TECHNIQUES, 93700 Drancy (FR)
(72) Inventeur: Mery, Jean-Claude, BENDIX EUROPE, F-93700 Drancy (FR)
(74) Mandataire: Bentz, Jean-Paul

(56) Documents cités:
- DE-A- 2 030 961
- DE-A- 2 519 830
- DE-U- 8 710 053
- FR-A- 2 170 712
- FR-A- 2 203 466
- FR-A- 2 497 309
- US-A- 3 553 642

## Description

La présente invention concerne les témoins d'usure des garnitures de friction d'un frein, notamment à disque, généralement mis en oeuvre dans les véhicules automobiles. On connaît de très nombreux types de tels témoins d'usure. Le document FR-A-2418387 par exemple décrit un témoin d'usure constitué essentiellement par une boucle en fil électriquement conducteur disposée dans une gaine en forme de douille isolante cylindrique et présentant un axe longitudinal. La boucle est constituée par un fil présentant deux parties sensiblement rectilignes parallèles à l'axe de la douille reliées ensemble à une extrémité.

Un tel témoin présente l'inconvénient de ne pouvoir être disposé que de façon à ce que son axe longitudinal soit perpendiculaire au plan d'usure des garnitures de friction.

Or, il est souhaitable de pouvoir disposer le témoin dans tous les sens possibles et notamment avec son axe parallèle au plan d'usure. Dans ce cas, il est aussi nécessaire que la réponse du témoin soit uniforme quel que soit sa position angulaire. Enfin il est souhaitable que le témoin soit extrêmement bon marché et puisse être fabriqué en grande série.

La présente invention a pour objet un tel témoin d'usure.

Selon l'invention, le fil de la boucle est en contact au moins une fois avec sensiblement toutes les génératrices de la paroi intérieure de la douille.

La boucle est favorablement constituée par une première partie sensiblement rectiligne disposée parallèlement à l'axe longitudinal de la douille et par une deuxième partie enroulée en hélice autour de la première partie.

L'invention sera mieux comprise et d'autres buts, avantages et caractéristiques de celle-ci apparaîtront plus clairement à la lecture de la description qui suit de modes de réalisation préférés donnés à titre non limitatif et à laquelle une planche de dessins est jointe sur laquelle :
- la Figure 1 représente schématiquement en coupe un patin de frein pourvu d'un témoin d'usure conforme à l'invention ;
- la Figure 2 représente schématiquement en perspective un mode de réalisation partiel d'un témoin conforme à l'invention.

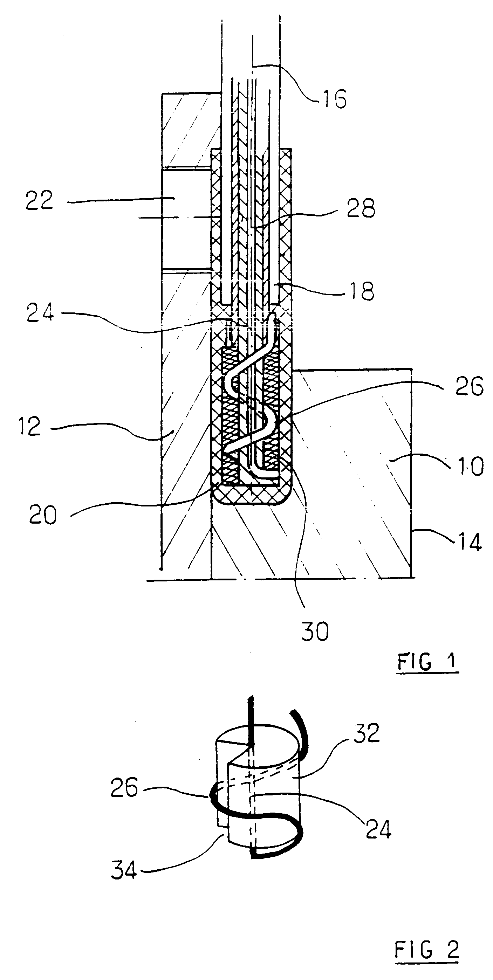

En référence maintenant à la Figure 1, un patin de frein comprend généralement une garniture de friction 10 collée ou fixée sur un support 12. La garniture de friction 10 est susceptible de venir en contact d'un disque (non représenté) par sa paroi 14.

Dans l'exemple représenté, le témoin a son axe longitudinal 16 parallèle au plan de friction déterminée par la paroi 14.

Le témoin comprend une gaine isolante 18 fermée par une douille isolante de forme cylindrique 20 fixée au support 12 par exemple au moyen d'un plot de centrage 22 pénétrant dans une ouverture prévue à cet effet dans le support 12. Dans la douille, une boucle est formée par un fil électriquement conducteur. Cette boucle est constituée par une première partie 24 sensiblement rectiligne disposée sensiblement parallèlement à l'axe longitudinal 16 du témoin, et par une deuxième partie 26 en contact au moins une fois avec sensiblement toutes les génératrices de la paroi intérieure de la douille. Ainsi cette deuxième partie 26 est ici enroulée en hélice autour de la première partie 24.

Les deux extrémités de la boucle sont reliées, de façon classique, soit à un câble bifilaire, soit à un câble coaxial 28 comme représenté.

Dans ce cas, la boucle de fil est constituée par l'âme du câble dont l'extrémité libre est connectée à la tresse du câble après avoir formé la boucle.

Pour assurer la rigidité du témoin notamment lorsque la douille 20 est en contact de friction avec le disque, l'espace 30 laissé libre par la boucle dans la douille 20 doit être rempli d'un matériau rigide.

Selon un mode de réalisation, cet espace 30 peut être rempli par injection d'un matériau thermodurcissable, tel un élastomère ou une colle, à température élevée.

Selon un autre mode de réalisation, on peut remplir cet espace au moyen d'une enclume préfabriquée de forme sensiblement complémentaire à la partie intérieure de la douille 20 comme représenté sous la référence 32 Figure 2.

Cette enclume 32 affecte donc une forme sensiblement cylindrique aux dimensions sensiblement correspondantes à celles de la douille.

Une rainure 34 est pratiquée longitudinalement dans l'enclume 32 pour accueillir la première partie 24 du fil dont la deuxième partie 26 est enroulée autour de l'enclume. L'ensemble boucle-enclume est alors introduite à force dans la douille 20. Une rainure hélicoïdale peut également être prévue sur l'enclume 32 pour accueillir la deuxième partie 26 du fil.

On obtient ainsi un témoin d'usure pouvant être disposé tant parallèlement que perpendiculairement au plan d'usure de la garniture de friction 10 et présentant dans tous les cas une réponse uniforme à l'usure.

Bien évidemment un tel témoin fonctionne de façon connue par rupture de la boucle.

De nombreuses modifications pourront être apportées par l'homme du métier sans sortir du cadre de l'invention tel que défini par les revendications annexées.

Par exemple, la douille précitée peut être constituée par un simple moule dans lequel est injecté le matériau thermodurcissable, le moule étant ôté ensuite. Il n'est donc pas nécessaire qu'elle soit physiquement présente dans le témoin tel qu'utilisé.

## Revendications

1. Témoin d'usure des garnitures de friction (10) d'un frein constitué essentiellement par une boucle en fil conducteur disposée dans une gaine (18) fermée par une douille isolante (20) de forme cylindrique et présentant un axe longitudinal (16) caractérisé en ce que la dite boucle est en contact au moins une fois avec sensiblement toutes les génératrices de la paroi intérieure de la dite douille (20).

2. Témoin selon la revendication 1 caractérisé en ce que la dite boucle est constituée par une première partie (24) sensiblement rectiligne disposée parallèlement au dit axe longitudinal (16) et par une deuxième partie (26) enroulée en hélice autour de la première partie (24) et reliée à cette dernière.

3. Témoin selon la revendication 1 ou 2 caractérisé en ce que le dit fil est constitué par l'âme centrale d'un câble coaxial à la tresse extérieure duquel elle est connectée après avoir formé la dite boucle.

4. Témoin selon l'une quelconque des revendications précédentes caractérisé en ce que l'espace laissé libre (30) par la boucle dans la dite douille (20) est rempli par injection d'un matériau thermodurcissable.

5. Témoin selon la revendication 4 caractérisé en ce que le dit matériau est un élastomère injecté à température élevée.

6. Témoin selon la revendication 2 caractérisé en ce que la dite partie rectiligne (24) est disposée dans une rainure longitudinale (34) pratiquée dans une enclume cylindrique (32) de dimensions sensiblement correspondantes à celles de la partie intérieure de la dite douille (20), la dite deuxième partie (26) étant enroulée en hélice autour de la dite enclume (32).

7. Patin de frein comportant une garniture de friction caractérisé en ce qu'il incorpore un témoin d'usure selon l'une quelconque des revendications précédentes.

## Claims

1. Wear indicator of the friction linings (10) of a brake, consisting essentially of a loop of conductive wire arranged in a sleeve (18) closed by means of an insulating bush (20) of cylindrical form and having a longitudinal axis (16), characterized in that said loop is in contact at least once with substantially all the generatrices of the inner wall of said bush (20).

2. Indicator according to Claim 1, characterized in that said loop consists of a substantially straight first part (24) arranged parallel to said longitudinal axis (16) and of a second part (26) wound helically round the first part (24) and connected to the latter.

3. Indicator according to Claim 1 or 2, characterized in that said wire consists of the central core of a coaxial cable, to the outer braiding of which it is connected, after said loop has been formed.

4. Indicator according to anyone of the preceding claims, characterized in that the space left free (30) in said bush (20) by the loop is filled by the injection of a thermosetting material.

5. Indicator according to Claim 4, characterized in that said material is an elastomer injected at a high temperature.

6. Indicator according to Claim 2, characterized in that said straight part (24) is arranged in a longitudinal slot (34) made in a cylindrical anvil (32) of dimensions corresponding substantially to those of the inner part of said bush (20), said second part (26) being wound helically round said anvil (32).

7. Brake shoe having a friction lining, characterized in that it comprises a wear indicator according to any of the preceding claims.

## Patentansprüche

1. Verschleilßanzeige für Bremsbeläge (10) einer Bremse, im wesentlichen gebildet durch eine Leiterdrahtschleife, die in einem Mantel (18) angeordnet ist, der durch eine isolierende Buchse (20) mit zylindrischer Gestalt abgeschlossen ist und eine Längsachse (16) aufweist, dadurch gekennzeichnet, daß die Schleife wenigstens einmal mit im wesentlichen allen Erzeugenden der Innenwand der Buchse (20) in Berührung steht.

2. Anzeige nach Anspruch 1, dadurch gekennzeichnet, daß die Schleife gebildet ist aus einem ersten, im wesentlichen geraden Abschnitt (24), der parallel zur Längsachse (16) angeordnet ist, und aus einem zweiten Abschnitt (26), der schraubenförmig um den ersten Abschnitt (24) herumgewickelt ist und mit diesem verbunden ist.

3. Anzeige nach Anspruch 1 oder 2, dadurch gekennzeichnet, daß der Draht durch den Mittelleiter eines Koaxialkabels gebildet ist, mit dessen Ummantelung er verbunden ist, nachdem er die Schleife gebildet hat.

4. Anzeige nach einem der vorhergehenden Ansprüche, dadurch gekennzeichnet, daß der von der Schleife in der Buchse (20) freigelassene Raum (30) durch das Einspritzen eines wärmeaushärtenden Materials ausgefüllt ist.

5. Anzeige nach Anspruch 4, dadurch gekennzeichnet, daß das Material ein bei einer erhöhten Temperatur eingespritztes Elastomer ist.

6. Anzeige nach Anspruch 2, dadurch gekennzeichnet, daß der gerade Abschnitt (24) in einer in Längsrichtung angebrachten Nut (34) angeordnet ist, die in einem zylindrischen Amboß (32) ausgebildet ist, dessen Abmessungen im wesentlichen mit denen des inneren Abschnitts der Buchse (20) übereinstimmen, wobei der zweite Abschnitt (26) schraubenförmig um den Amboß (32) herumgewickelt ist.

7. Bremsklotz mit einem Bremsbelag, dadurch gekennzeichnet, daß in ihm eine Verschleißanzeige nach einem der Vorhergehenden Ansprüche eingesetzt ist.
